# EUROPEAN PATENT APPLICATION

(11) **EP 2 023 280 A1**
(43) Date of publication of application: **11.02.2009**
(21) Application number: 08013959.5
(22) Date of filing: 04.08.2008
(51) Int. Cl.: G06Q 10/00

(54) **System and method to measure effectiveness of business learning**

(30) Priority: 02.08.2007 US 882556
(71) Applicant: Accenture Global Services GmbH, 8200 Schaffhausen (CH)
(72) Inventor: Higgins, John, G., Keller, TX 76248 (US); Meade, Carole, A., Denver, CO 80231 (US); Swiston, Andrew, Glen Ellyn, IL 60137 (US); Lester, Cathy, Lakewood, CO 80215 (US); Hubbel, John, R., Swarthmore, PA 19081 (US); Stovall, Kenneth, T., Atlanta, GA 30308 (US)
(74) Representative: Müller-Boré & Partner Patentanwälte

(57) **Abstract**

The invention generally describes learning solutions and related methods for managing the learning and training needs of an organization in a manner that is responsive to dynamic business timelines, goals and strategic objectives. Business goals are determined through examination of existing business data sources, so as to tailor learning solutions to business impacts. Accurate computations of return on training investment are provided to allow accurate assessment of the effectiveness of training programs. Also disclosed are networks of learning platforms that together implement the learning solution by providing electronic tools and information sharing capabilities needed by a learning solution services provider to efficiently implement and manage learning efforts according to the business desires of a complex learner organization, while receiving organization performance data in order to compute and report performance measurements.

## Description

### CROSS-REFERENCES TO RELATED APPLICATIONS

This application is a continuation-in-part of: U.S. patent application Serial No. 10/265,156, filed on Oct. 7, 2002, which claims the benefit of U.S. provisional patent application Serial No. 60/391,932, filed on June 28, 2002, and U.S. provisional patent application Serial No. 60/391,929, filed on June 28, 2002, which is hereby incorporated by reference in its entirety.

### BACKGROUND

### 1. Field of the Invention

The present invention relates to a learning solution and related methods for managing the learning and training needs of an organization in a manner that is responsive to dynamic business needs. In particular, the present invention relates to learning solutions that are designed in accord with an organization's existing business data sources and goals set relative to existing business data.

### 2. Background Art

Employee training and education are becoming increasingly more critical to the success of organizations within today's modem global economy. Decision support capabilities are needed that ensure that ongoing learning efforts are aligned with the business strategies and budget priorities as measured by quantifiable performance metrics. Such decision support capabilities must effectively collect and present to decision makers key indicators upon which to base their decisions.

Further, contemporary learning solutions fail to provide the ability for executives to monitor performance of learning solution efforts in achieving their underlying purpose of furthering business strategies. The inability to accurately monitor performance metrics leaves organizations and their learning services with an inability to ensure service quality, allow for accurate resource forecasts, allocate costs and provide a means to measure the learning solution's success helping the organizations meet goals and commitments. In contemporary learning solutions, any performance data that is gathered is typically obtained through surveys and self-reporting. Thus, even though modem organizations track myriad types of data themselves, that actual data is not used to measure the success of learning solutions.

Thus, there remains a need in the art for improvements in institutional learning solutions and supporting processes.

### SUMMARY OF THE INVENTION

In light of the above-described and other deficiencies inherent in contemporary learning solutions, the various embodiments of the present invention provide learning solutions and related methods that ensure that an organization's instructional content and delivery mechanisms are aligned with the business and learning objectives of that organization. Such learning solutions and related methods are capable of dramatically improving an organization's efficiency by identifying, prioritizing, developing and delivering employee training efforts and by providing dynamic system monitoring capabilities that ensure the effectiveness of the critical employee training efforts. Various aspects of the invention provide, among other things, tracking of performance metrics to businesses by leveraging existing data collection systems in order to design learning solutions.

In this regard, a first aspect of the invention includes a method for aligning employee learning efforts with strategic business goals and priorities of an employer organization. The method comprises receiving a set of business goals from the employer organization, and identifying performance data collected by the employer organization. The method further includes transforming the business goals of the employer organization into performance metrics relative to the performance data, and designating business tracts and initiatives for use in sorting potential learning efforts of the employer organization. These tracts and initiatives correlate to the performance metrics. Additionally, the method includes receiving requests from the employer organization for learning efforts to train the employees and sorting the requests into tracts or initiatives, and selecting appropriate learning effort approaches for each received request. The appropriate learning effort approaches are subject to a budget allocation for the tract or initiative into which each learning effort request is sorted. Also, the method includes monitoring the performance data subsequent to delivery of the learning effort and computing changes in the performance data caused by delivery of the learning effort, and reporting measurement of the performance metrics based on the computed changes in the performance data.

A second aspect of the invention includes a network-based system to provide coordination and synchronization of learning content development, delivery, and management. The system includes a content development module that itself includes submodules for receiving input related to learning content and generating computer-deliverable learning content, and an electronic delivery module that itself includes submodules for delivering instruction to students. The delivering of instruction in turn includes asynchronous computer-delivered instruction and synchronous virtual classroom instruction, with the computer-delivered instruction incorporating the learning content. The system further includes a data collection module that itself includes submodules for receiving performance data from an external data source and measuring the performance data against stored performance metrics. The performance metrics measure the results of the delivery of the instruction to students. Additionally, the system includes a resources synchronization module that itself includes submodules for scheduling and allocating the utilization of learning resources in the delivery of the instruction and in the development of the learning content.

### BRIEF DESCRIPTION OF THE DRAWINGS

The accompanying drawings are included to provide further understanding of the invention and are incorporated in and constitute a part of this specification. The accompanying drawings illustrate embodiments of the invention and together with the description serve to explain the principles of the invention. In the figures:

FIG. 1 is a schematic diagram depicting the interaction of the basic modules of a learning solution according to embodiments of the present invention;

FIG. 2A is a flow diagram depicting a process utilized in embodiments of the present invention for alignment of learning efforts with prioritized business strategies;

FIG. 2B is a diagram depicting an exemplary learning blueprint that could be utilized in preferred embodiments of the invention to prioritize and fund learning efforts implemented by learning solutions of the invention;

FIGS. 2C and 2D are diagrams depicting the mapping of plans for learning efforts onto a learning blueprint according to preferred embodiments of the present invention;

FIG. 3 is a flow diagram depicting a process for utilizing existing sources of data for measuring performance of a learning solution;

FIG. 4 is a flow diagram depicting an iterative process for developing learning content according to embodiments of the present invention;

FIG. 5 is a schematic diagram depicting the interaction of delivery sub-modules of a learning solution according to embodiments of the present invention; and

FIG. 6 is a schematic diagram depicting a network of learning platforms that communicate to provide coordination and synchronization of learning content development, delivery and management so as to enhance the learning solution's response time to instructor, student, and/or resource concerns and issues.

### DETAILED DESCRIPTION OF EMBODIMENTS OF THE INVENTION

As used hereafter, the term "organization" is used broadly to identify the business entity that is in need of a solution to provide learning services. The learning solutions according to the present invention can either be outsourced by such organizations (whereby the processes of the learning solution are implemented by a third-party learning services provider under contract to an organization) or can be implemented internally within the organization (as, for example, an independent business unit within the "outsourcing" organization). In embodiments of the invention wherein a learning services business unit within an organization provides learning services to other business units within the organization, the learning services business unit would still feel the need to satisfy customers as it would be responsible for generating a "profit" by meeting predefined performance metrics set by "client" business units (i.e., the other more traditional business units of the organization) and allocating learning effort charges as expenses to the client business units as appropriate. In this manner, the learning solutions according to the present invention can said to be "outsourceable" by an organization.

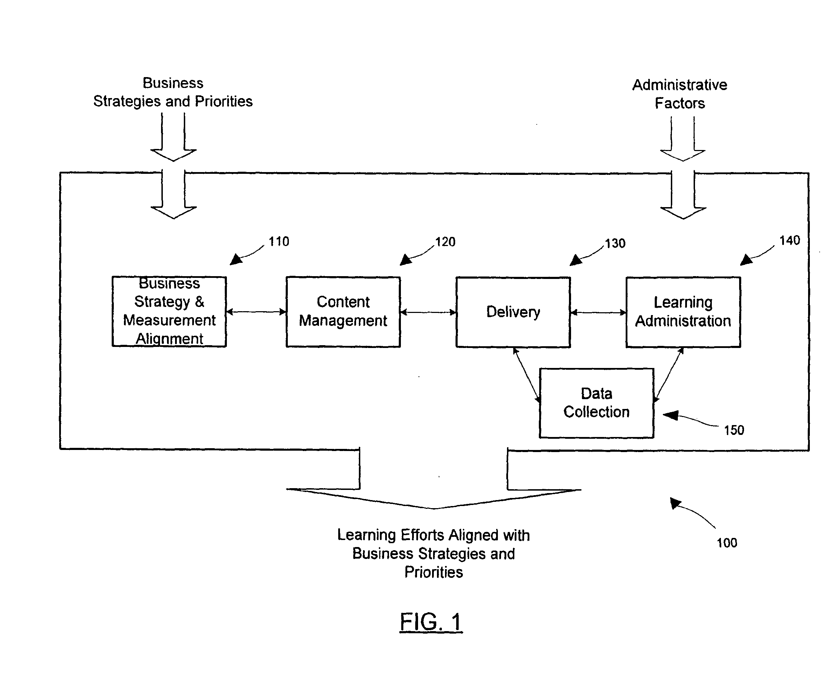

A learning solution 100 is conceptually depicted in the schematic diagram of FIG. 1. Solution 100 includes modules of interrelated and interdependent business processes, which may be automated by electronic tools provided by various communication platforms as will be described in more detail below, that manage and coordinate the learning solution tasks of the prioritization of business learning needs and selection of learning effort approaches, the development of learning content, the delivery of learning content and instruction, and the administration of learning solution performance. The interaction of the various modules of business processes with one another helps to define the services, performance metrics and application capabilities, among other things, required to support an optimized outsourceable learning solution to meet a given organization's business learning objectives.

As depicted in FIG. 1, business strategy and measurement alignment module 110 includes processes that identify business strategies of the organization and accept requests for learning efforts (e.g., employee training in a particular product line) from the organization (and/or its business units). It identifies performance data collected by the organization against which success of a learning effort could be measured. It then aligns the organization's overall learning solution goals with its business goals by determining learning objectives of the learning solution in terms of the collected performance data. The processes of the business strategy alignment module thereafter identify potential learning efforts to meet the identified learning objectives of the organization, and support the downstream development and delivery of a tailored learning curriculum by providing relevant information to processes in the various other modules (120, 130, 140, and 150) of solution 100. This alignment ensures that learning curricula are designed to meet the organization's most current needs.

Once solution 100 identifies what types of learning or curriculum are desired and/or required by the organization and prioritizes them in order to meet business objectives, the solution is also able to deliver suitable learning materials to fill those needs. Content management module 120 includes processes and associated tools required to build and/or buy appropriate learning content based upon learning objectives and delivery requirements. On one hand, it may be easier and cheaper to buy precompiled learning content from a third-party as opposed to developing or compiling new content. Alternatively, the specialized needs of the organization may make it difficult to utilize outsourced or precompiled learning or training content. Content management module 120 facilitates solution 100 taking factors such as these appropriately into consideration when assembling suitable learning content.

After learning content has either been obtained from a third-party or developed internally by the learning solution, the business processes of content management module 120 also create, manage and operate a central repository of learning content and knowledge objects. The learning content and knowledge objects are appropriately formatted, tagged and cataloged such that they can be reused as appropriate and may be easily accessed for delivery to the learner in the desired manner when scheduled or requested.

Delivery module 130 in turn contains business processes and related tools for providing the delivery of high quality training across a plurality of synchronous and asynchronous media in a cost efficient manner. The delivery business processes in module 130 facilitate, for example, instructor led training, virtual instructor led training (such as with a live instructor connected to students through videoconferencing or over a computer network like the Internet) including virtual classrooms, and interactive computer software-delivered training systems for self-paced learning. Further, the delivery business processes in module 130 manage coordinating the scheduling of the facilities where training takes place with appropriate instructor and learner commitments.

Still referring to FIG. 1, learning administration module 140 contains business processes and associated tools necessary to provide learning management and administrative services across the entire learning solution 100. Exemplary learning administration business processes include individual curriculum management, course registration, course fulfillment management, and record keeping of training results.

Data collection module 150 contains business processes and associated tools necessary to provide an interface between the organization's data sources and the learning solution 100. The data collection module 150 assesses the organization's underlying data collection infrastructure and determines an appropriate mechanism for receiving data required to assess achievement of the learning objectives. This mechanism may be server push or pull, and may use real-time or periodic updates, depending on the requirements of the organization, security concerns, network infrastructure, as well as other issues. Underlying data formats used by the organization may affect the actual data fields received by the data collection module 150. The data collection module 150 may communicate with the business strategy and measurement alignment module 110 in order to revise learning objectives as necessary to accommodate the actual data fields received. The data collection module 150 also includes reporting capability in order to report on the data collected from the organization.

Preferably, the learning solution 100 also includes a business management module (not depicted in FIG. 1) operating in communication with modules 110-150 and facilitating the overall operation of the learning solution with and/or within the learner organization. The business management module includes processes and mechanisms that manage the overall lifecycle of a learning initiatives and efforts and provide continuous improvement to currently ongoing and future learning initiatives and efforts. The business management module assesses the solution's compliance with overall strategic initiatives and business priorities of the learner organization by reviewing performance metrics that are tracked and compiled by the data collection module, and also optionally uses those performance metrics to handle financial settlements regarding the rendering of learning services to various entities. The business management module thereby provides the learning solution with the capability to manage the overall lifecycle of learning initiatives and efforts and to provide continuous improvement to currently ongoing and future learning initiatives and efforts in a "profit-driven" manner.

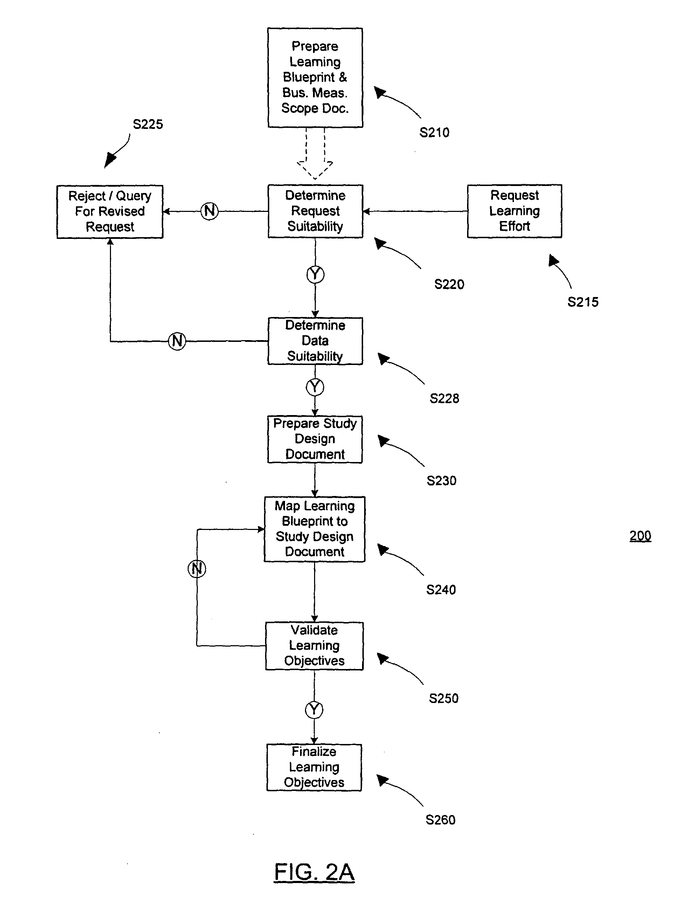

The processes of the business strategy and measurement alignment module 110 are central in ensuring that the learning efforts produced by the learning solution entities are completely aligned with the strategic objectives of the organization as expressed by the learning objectives. The business strategy and measurement alignment module 110 passes the requests from the organization (or business units thereof) for new learning efforts or for modified learning efforts through a formal process whereby the requested learning effort becomes cast in a consistent direction with organizational strategic objectives and priorities, funded from appropriate budget allocations, and transformed into a work in progress by the learning solution 110. Referring now to FIG. 2A, a business strategy alignment process 200 utilized in certain embodiments of the present invention is depicted and includes various steps that enable newly requested and ongoing learning efforts to be aligned with prioritized business strategies and goals.

As depicted in FIG. 2A, in step S210 business strategy alignment process 200 first prepares a customized learning blueprint and business measurement scope document for the organization. A learning blueprint provides a grouping and organization of various business strategies and goals across the entire organization and identifies potential areas of learning. Each organization's learning blueprint is therefore unique and is used by the business strategy alignment process 200 and the business strategy alignment module to determine which potential learning efforts (from the many requested by various entities within the organization) introductions or modifications are funded (including from which budget allocation and to what amount) and pursued (i.e., if the requested learning effort consistent with one or more stated learning strategies or objectives reflected in the blueprint) and exactly how the request is fulfilled (i.e., requested learning efforts that map to higher organizational priorities may be entitled to different funding or resources). An organization's learning blueprint is typically reviewed and revised periodically by the business strategy alignment module for the organization (typically in light of information provided by the business management module), such as once or twice a fiscal year to reflect changing business strategies and learning services budgets or insights gained from business measurement studies. Of course, an organization's learning blueprint can be reviewed and revised at any time whenever significant changes in the learning focus and business strategies or priorities of the learner organization occur.

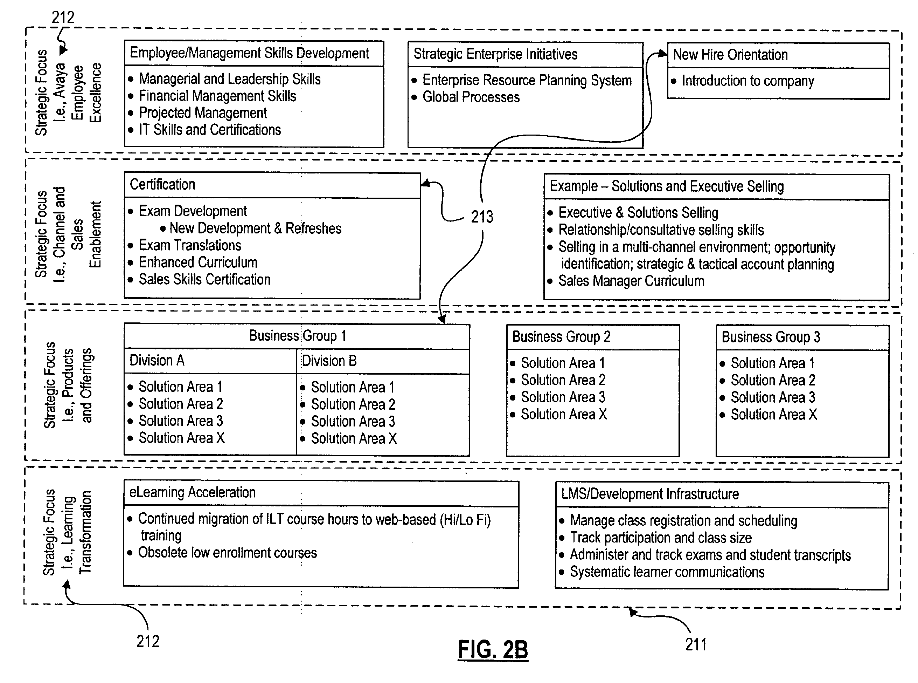

FIG. 2B depicts an exemplary learning blueprint 211 that could be utilized to prioritize and allocate funding to learning efforts and business measurement studies implemented by learning solutions of the invention for a particular hypothetical organization that is outsourcing its learning needs. As shown in FIG. 2B, a learning blueprint 211 itemizes different strategic objectives of the organization into various tracts 212 which can represent, for example, organizational areas of focus, product groups, business units, or departments within the organization. For a given organization, as depicted in learning blueprint 211, a tract can be assigned, for example, for product segments, sales skills, general employee development and organization culture transformation. For each such tract, the learning blueprint itemizes initiatives 213 that reflect particular areas in which the organization expects to focus a significant portion of its attention and expenditures on learning efforts. Thus, an employee development tract can contain separate initiatives for new employee orientation, and training regarding an upcoming organization-wide computer system change. Similarly, the product segment tracts can include separate initiatives for major product lines (e.g., custom database solutions) or even individual products of high priority (e.g., new products introducing new product lines). For each tract 212 and/or each initiative 213 itemized within the learning blueprint 211, overall budget caps can be assigned to assist the learning solution in obtaining, managing and delivering learning content that serves the strategies and priorities of the organization.

Referring again to FIG. 2A, the business strategy alignment process 200 initially receives a request in step S215 for learning services (a "learning effort request") from an individual or business unit of the organization. The learning effort request details what the individual or business unit submitting the request believes is an important learning need that requires a new or modified learning effort. According to embodiments of the invention, a learning effort request can be made in any form, including a verbal communication, a voicemail message, a letter, or an email message directed to a contact for the business strategy alignment module. Preferably, the request is provided on a standardized form (which, even more preferably, can be electronically submitted) that is completed by the requesting entity, and where the form contains queries designed to elicit sufficiently detailed information that allows the business strategy alignment module contact to understand the request sufficiently. After receiving a learning effort request, in step S220, an initial determination is made regarding whether the request is addressable through training efforts or whether it would alternatively be best addressed through more simple measures like documentation or a newsletter produced by the resources of the requesting business unit of the organization. In the event that the learning effort request is not deemed suitable for the learning solution, at step S225 a rejection is sent to the requester. Alternatively, at S225, a query for a more detailed learning effort request is sent to the requester.

Whenever a learning effort request is deemed to present a learning need that is addressable by the learning solution, step S228 is performed. Step S228 determines whether the data that is available is suitable for measuring performance of the learning solution. Step S228 includes transforming the identified learning needs into performance/impact objectives that can be measured by well-defined performance metrics. Further, the data sources of the organization are examined to determine if they are suitable for measuring the performance metrics. The performance metrics may be determined with reference to relevant and available data sources. For example, if the organization wishes to make improvements in employee morale, it likely does not track data measuring morale. However, if the organization desired a 5% improvement in employee attendance, daily attendance data could be suitable to measure such a performance metric. In the event that the available data sources are not deemed suitable or available for the desired performance metrics, at step S225 a rejection is sent to the requester, and the requester may engage other options to establish methods for obtaining suitable data.

If suitable data is available to measure the impact of the learning solution on business results of the requested learning effort, in step S230 an initial action proposal for the study design and the preliminary learning effort plan ("preliminary LEP") are generated. The preliminary LEP makes a pre-production judgment as to the type of delivery that will be most advantageous (Web-based course for self-paced instruction, a course involving live or virtual classroom time with an instructor, etc.) given the learning effort request and likely logistical/budget constraints, and whether the request should be addressed by creating wholly new learning content or by modifying the content of an existing learning effort.

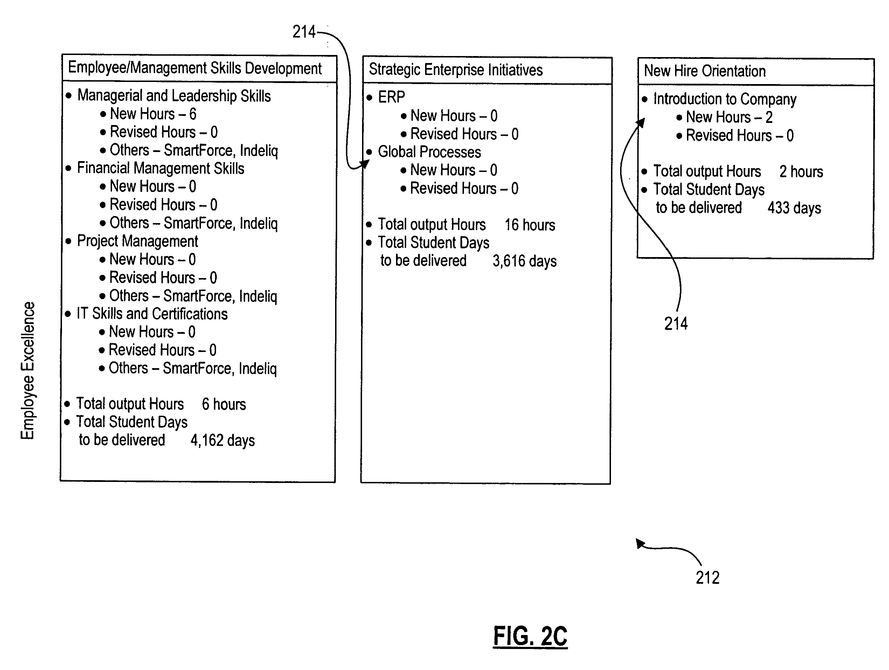

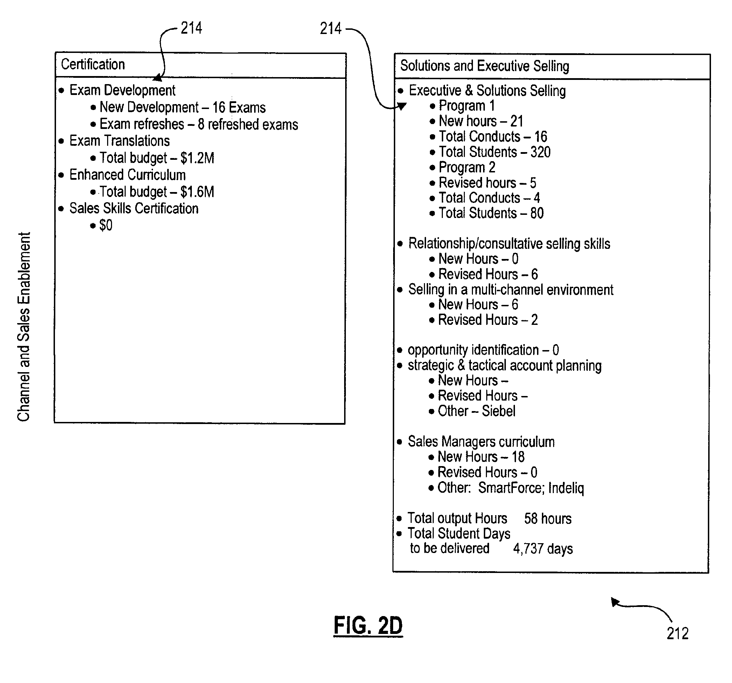

In certain preferred embodiments of the invention, the learning solution adopts a learning effort cost schedule which provides a standard set of prices or charges that will be "charged" to the requesting entity for each type of content development or delivery type that can be utilized in preparing a learning effort in response to a learning request. For example, a first rate could be charged for each hour of high-fidelity web-based training content developed, a second rate could be charged for each hour of low-fidelity computerized content developed, and a third rate could be charged for each hour of instructor-led training actually delivered. Therefore, when a new learning request is received, the initial action proposal as detailed in the study design and preliminary LEP gets mapped at step S240 into one of the tracts/initiatives in the learning blueprint 211 as appropriate. Alternatively, of course, the cost that will ultimately be charged to the requesting entity can be estimated in a custom manner on a case-by-case basis when necessary or preferred. Once a price or charge has been estimated for the initial action proposal, that estimated price is compared against the budget restraints for the tract and/or initiative to which the effort is mapped. FIG. 2C and FIG. 2D depict in exemplary fashion the mapping of learning effort plans 214 onto various tracts 212 and initiatives 213 of learning blueprint 211 according to certain preferred embodiments of the present invention.

At S250, a validation check is made to assess whether the preliminary LEP is feasible given budget priority restraints imposed by the current learning blueprint. If it is not, process 200 returns to step S240 and revises its initial action proposal to produce a modified (e.g., scaled down or re-targeted within the learning blueprint) study design document and preliminary LEP. This modified study design document and preliminary LEP are then mapped to the learning blueprint (as before, again at step S240) using a revised cost estimate, and the validation check is repeated (at step S250). This process loop repeats itself until the validation check is successful, which indicates that the action proposal fits within business goals and priorities (as evidenced by, among other things, budget allocations associated with the learning blueprint). At this time, a finalized learning effort proposal ("LEP") is prepared in step S260 for use by the content management module. This LEP contains more detailed budget allocation information, delivery timelines, and initial content design requirements for use by the other modules of the learning solution.

It should be understood that in performing some of the processes of the business strategy and measurement alignment module 110 it may be necessary for person to person interaction to occur between learning administrators and executives or managers of the learner organization. For example, in preparing and revising a learning blueprint and in establishing budget allocations for learning initiatives it may be necessary for the business strategy and measurement alignment module 110 to interface with the learner organization in order to identify and prioritize business strategies. In certain embodiments of the invention, such an interface can be provided by a learning management council included of representatives from the learner organization. Optimally, the representatives are taken from all major segments of the organization's business, such as various product segments, business groups, administrative groups (e.g., human resources and information technology), and regional/international divisions and channels, to provide a comprehensive interface with the ever-changing goals of the organization. This learning management council could thereby serve as an intermediary between learning administrators and strategy-driving upper management of the learner organization.

The learning solution 100 according to some embodiments of the present invention can facilitate the dissemination of critical learning information by internally developing deliverable learning content that is consistent with the business needs of a specific organization. By aligning the development of the information with an organization's performance goals according to its own performance data, the learning solution 100 presents the critical information to the students in a logical, intuitive and valuable manner that is designed to enhance student receptivity and knowledge retention.

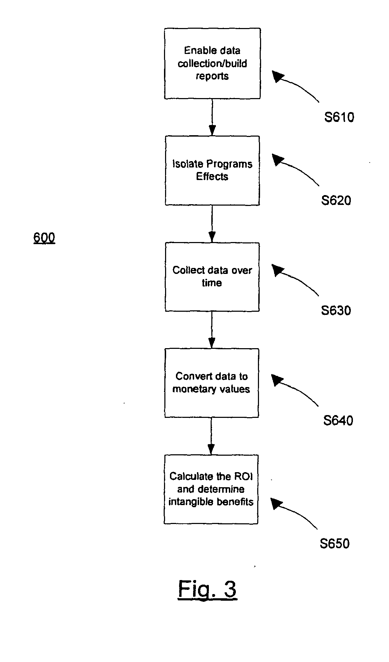

FIG. 3 illustrates a process 600 for using an organization's existing data sources to measure performance of a learning solution. In step S610, the business strategy alignment module instructs the data collection module to set up interfaces to the organization's existing data sources in order to collect data, and create reports for collected data. In step S620, a mechanism is chosen to isolate the business effects of the learning solution. Possible mechanisms include the use of a control group, the use of historical data to create a baseline, and the use of estimated data to create a baseline. The mechanism is chosen according to the organization's data infrastructure and needs. For example, the use of a control group requires data that is granular enough to separate results for members of the control group from others. Similarly, in order to create a historical baseline, actual historical data must be available.

In step S630, data is collected and reported by the data collection module to the business strategy alignment module. A report is used in combination with the business effect isolation mechanism to determine the change in the performance metrics in the learning blueprint. In step S640, this change is converted to monetary value. For example, a 5% increase in sales volume might translate into $100,000 in increased profits. The exact computation to use is determined by business rules for the particular performance metric. Step S650 uses known techniques to combine the change in monetary value with the cost of the learning solution to compute the return on investment (ROI) of the learning solution.

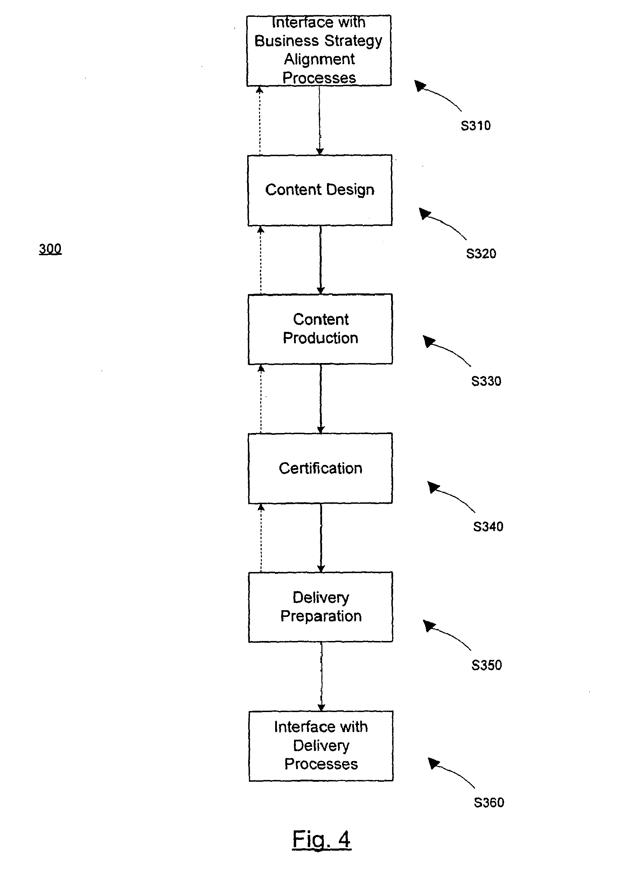

FIG. 4 shows a content development process 300 that embodies a combination of iterative steps that enable a learning solution to leverage benefits of the business strategy alignment module processes and thereby identify, develop, and manage deliverable learning content internally for an organization's required learning efforts. Content development process 300 starts by interfacing in step S310 with business strategy alignment processes to receive information regarding the learning content that needs to be developed for a learning effort (such as by receiving a LEP produced according to the process 200 of FIG. 2A above). This passage of business strategy alignment information helps to ensure that any new or modified learning materials and content are always aligned with the business learning strategies and objectives of a licensing organization. The business strategy alignment information, such as in the form of a LEP, is then passed down (and possibly revised as described below) through the various subsequent steps of content development process 300, including content design step S320, content production step S330, certification step S340, and delivery preparation step S350 until it is ultimately handed off with any newly-developed deliverable learning content at step S360 by interfacing with the processes of the delivery module.

In operation, upon receiving the initial content design requirements from the business strategy alignment processes (such as in the form of a LEP), the content design step S320 leverages technology and organization services to implement a series of functions, tests, and analyses to produce an initial layout of any new content that needs to be developed for a given learning effort. The functions, tests, and analyses performed during content design S320 include performance strategy and role impact strategy to make an initial assessment regarding a recommended instructional design (i.e., whether to utilize computer delivered self-paced courses, instructor-led training ("ILT"), virtual classrooms, etc.). In making this initial assessment, care is taken to perform audience analyses and environment analyses to ensure that the chosen instruction design is not incompatible with the logistics of the learning audience (e.g., whether it is feasible to expect the learners to be able to attend pre-scheduled live classes with an instructor) or with learning services resources (such as instructor/classroom availability, budget and development schedule constraints). The initial assessment will often also include media layout design (i.e., for a computer-delivered interactive course, this would include a layout of the types of audio, video, and graphical presentations and simulations that would be required or useful in teaching the subject matter) and indications as to whether subject matter experts ("SMEs") would be necessary for consultation.

In the event that additional information is necessary or that the learning content cannot be designed within budget or logistical constraints, feedback can be provided upstream to the business strategy alignment processes to obtain revised initial content design requirements (such as in the form of a modified LEP). This feedback is indicated in FIG. 4 by the broken arrow going from step S320 to S310, with the broken nature of the arrows indicating the optional upstream aspect of this flow. All of the information included in the initial design assessment is used to produce a development plan that is sensitive to budget and logistical constraints and delivery timelines detailed in the LEP, with the development plan then being referenced by the later steps of content development process 300.

The results and/or conclusions detailed in the development plan as produced from the various analyses performed during content design step S320 are then utilized for downstream content production step S330, certification step S340, and the delivery preparation step S350 so as to ensure that the development of a course's deliverable learning content and materials remains consistent with the organization's business learning strategies and objectives and particular learning effort need (as reflected in the LEP and development plan). During content production step S330, technology and organization services are leveraged to develop, license and build suitable learning content for the carefully designed course curricula. This content production step S330 can include, for example, subject matter information collection and organization via SMEs, web-based training ("WBT") learning content object development for self-paced learning courses delivered via computer, ILT and virtual ILT ("v-ILT") curriculum layout and scheduling development, multi-media learning content development (including both pre-production and post-production development) for use in one or more courses of various types, packaging and integration with pre-existing learning content, negotiation of any licenses or rights to use purchased content, instructor development and training, and job-aid production.

As with the prior content design step S320, results of the ongoing content production step S330 can be communicated upstream to the content design step S320 to facilitate peer review and enable revisions to current design plans or even further upstream to enable LEP revisions if necessary. Once learning content has been finalized (or, optionally, a trail version capable of being reviewed has been finalized), a certification step S340 is performed to review the output of the content production step S330. This certification compares the produced content against the design requirements of the LEP and development plan to ensure that the overall course development, production, and packaging are consistent with the licensing organization's business learning strategies and objectives before the content is certified and released for delivery. Any content that does not match these design requirements is sent back to the content production step S330 stage (or earlier stages) for revision as shown by the broken arrows.

After the design step S320 and production step S330 of course content and materials followed by their certification step S340, the certified new or revised content is subjected to a delivery preparation step S350. For computer delivered instruction objects and the like, this delivery preparation step can include formatting or versioning of any content objects to be compliant with industry standards of electronic learning content delivery (such as the SCORM standard), and tagging and cataloging of the content objects to simplify their storage, retrieval, and ultimate delivery to learners. Content development process 300 ends by interfacing in step S360 with the delivery module and providing the completed and properly formatted, versioned, tagged and cataloged deliverable learning content objects for learning use.

As will be readily appreciated by one of ordinary skill in the art, it will not always be the best approach for the learning solution 100 to internally develop deliverable learning content in response to a learning effort requested by the organization. Often, time constraints, subject matter constraints, and other logistical issues may make it more cost effective for the learning solution to purchase or license previously developed learning content (completely ready for delivery to learners or otherwise) or commission the development of suitable learning content from third-party providers. For example, if the organization needed employee training for a new computer system, it may be more efficient to purchase training or reuse training materials from the provider of the new computer system as opposed to creating new learning content internally from scratch. Therefore, the content management module 120 according to embodiments of the invention also contains processes that enable the procurement of third-party learning content and services as well as integrating that content and services for delivery and administration within the control of the learning solution.

As was the case with internally developed learning content, any learning content purchased or licensed from third-party providers would need to meet the detailed budget allocation information, delivery timelines, and initial content design requirements established by the business strategy alignment module (such as is detailed in a finalized LEP). Also similar to how was described above with respect to the content development process 300, any content obtained from third-party sources would be certified, formatted, versioned, tagged and cataloged in roughly the same manner as internally developed learning content. After receiving third-party content, the content management module still, like in process 300, certifies the content against requirements established by the business alignment module. Any electronic learning content would then be versioned and/or formatted to be compatible or consistent with internally developed content (such as if, for example, digital self-paced learning content materials need to be converted into SCORM standard compliant format for later asynchronous electronic delivery to students). Such electronic learning content would then be tagged appropriately and placed into data stores to facilitate organization, delivery upon demand, and location/reuse of the content for the current and future learning efforts. In this manner, content management module 120 allows the learning solution 100 to take advantage of the most efficient mechanisms for assembling appropriate learning content for efforts needed by the organization.

As indicated above with respect to the discussion of FIG. 1, the mechanisms and media through which the delivery module 130 provides learning content to learners of the organization is adapted to service the overall business strategies and specific learning efforts needs of the organization by organizing delivery to learners in the most resource efficient and cost efficient manner. Suitable mechanisms and media by which learning content may be delivered to students according to embodiments of the present invention can include combinations of computer-delivered or web-based courses available over electronic networks (such as the Internet) for self-paced instruction, interactive virtual classroom instruction and related media (both video and animation) available over electronic networks which utilize instructors to lead classrooms of remotely located students, in person ILT, and paper-based products used in conjunction with by self-paced or instructor training

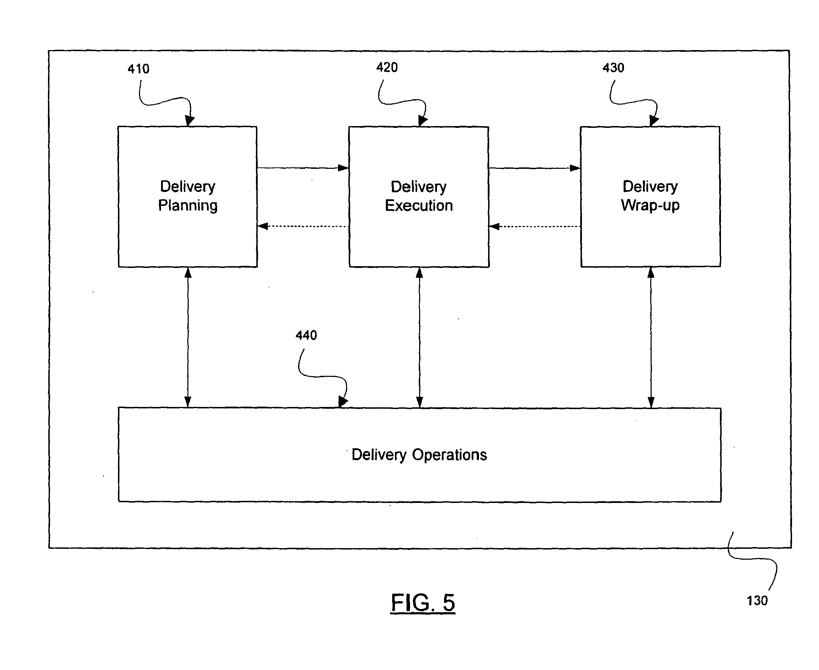

Turning now to FIG. 5, there is depicted the interaction of several delivery sub-modules which together interact to include a delivery module 130 of a learning solution 100 according to embodiments of the present invention. A delivery planning sub-module 410 and delivery execution sub-module 420 handle the coordination and actual delivery of learning content, while delivery wrap-up sub-module 430 collects and distributes data regarding completed learning content delivery. The delivery operations sub-module 440 concurrently serves as communication interface between the delivery module 130 and the other modules of the learning solution. The delivery operations sub-module 440 also serves as a communication interface between the delivery module 130 and third-party service providers to whom portions of learning efforts are contracted, such as education service providers ("ESPs") and value added distributors ("VADs").

The delivery planning sub-module 410 contains various processes that plan for upcoming new learning efforts by forecasting demand (sessions), scheduling delivery and resources timelines and allocations, and confirming registration of learners prior to delivery execution. In some embodiments of the invention, coordination of such delivery planning processes are detailed in a delivery support plan ("DSP"). The DSP is a tool or document that is created and grows throughout the delivery process. For example, all of the information about a learning effort course that is being offered to the organization, including forecasted demand and/or actual demand from for the course from the organization, is reflected in the DSP. The information and data within the DSP can then be used to aid in future forecasting of demand for the same course or for similar or related courses by the delivery planning sub-module 410. The scheduling of resources and delivery coordination that occurs during delivery may include regional and global scheduling as necessary for a given learning effort. Additionally, in certain embodiments of the invention, a scheduling synchronization tool may be used to facilitate the management of scheduling and decision making information, including the identity of the instructors who are teaching each course, the location of where the course is being taught, the allocation of materials and equipment that are being used by the instructor to teach the course, and the usage of any electronic resources for virtual instruction.

The delivery execution sub-module 420 is communicatively coupled downstream from the delivery planning sub-module 410. This sub-module contains processes that coordinate the occurrence of field trials, training sessions for instructors in new course curricula, distribution of session materials (e.g., manually for instructor lead training (ILT) and printed materials, and electronically for virtual ILT and classrooms, and Web-based or other self-paced computer-delivered instruction), and session set-up and breakdown processes. For example, the training for instructors can include helping them learn how best to teach certain content within changing course curricula by providing lists of recommended goals for the instructor to accomplish during the course.

As depicted in FIG. 5, the delivery wrap-up sub-module 430 is communicatively coupled downstream from the delivery execution sub-module 420. The delivery wrap-up sub-module 430 contains processes which close delivery execution sessions and generate delivery-related data for quality control checks and performance metrics for learning effort and delivery success. Quality control checks can relate to the management of the performance and quality of instruction, including solely computer-delivered learning content and learning content delivered by both internal and third-party instructors. For example, instructors could be measured against pre-defined standards of instruction satisfaction by having students complete surveys or checklists that are later reviewed and correlated with other performance metrics (such as learning-output performance metrics like raw student results on certification exams administered during a course). The delivery wrap-up sub-module 430 optionally collects relevant delivery-related performance metrics data for reporting via the delivery operations module 440, including, for example, student course attendance, time it takes for an average student to complete a self-paced course unit, student scores on tests, instructor hours, etc.

As described above, the delivery operations sub-module 440 may serve as a communication interface between the delivery module 130 and third-party providers, such as ESPs and VADs and as an interface with other modules of learning solution 100. Other processes that may be contained within this sub-module address delivery process improvement, financial management, resource management, facilities management, performance analysis, delivery support plan maintenance, instructor certification, vendor/supplier management, remote learning services coordination, translation and localization of courses, archiving of courses, and business partners/VAD program administration. In an embodiment, the scheduling tool described above with regard to the delivery planning sub-module 410, may also be used to help in resource management and facilities management by the delivery operation sub-module 440. Such resource management would include the management of instructors by determining their eligibility to teach a certain curriculum and by cultivating their career growth while facilities management would involve managing the buildings and equipment necessary for delivery of the curriculum. Further, instructor certification processes can interface with processes for training instructors (described above and contained in the delivery execution sub-module 420) to make certain that internal instructors, as well as third-party instructors, meet minimum standards of effectiveness.

Referring back to FIG. 1, embodiments of the learning solution 100 according to the present invention require administrative function support which is provided by the learning administration module 140. The learning administration module 140 coordinates the process that respond to various administrative factor inputs as necessary to successfully operate and manage a global learning system. The administrative processes according to the present invention allow, inter alia, students to enroll for courses, instructors to finalize "grades" or other indicia of course passage, and learning administrators to request and reserve resources for specific classes. While similar administrative functions are present in various common learning environments, such as in traditional colleges and universities, the processes employed in these traditional environments to perform these functions are not capable of integrating these functions into a learning solution that enables alignment with business strategies by, among other things, generating performance metrics.

Specific learning administrative functions that may be provided by a learning administration module 140 in embodiments of the present invention include, but are not limited to, enrolling students in courses, wait listing students enrolled for coursed that are closed, providing documentation to training coordinators, creating new user profiles, confirming enrollment in a specific course, adding a course session to the learning system and notifying the instructor by e-mail, developing and approving course catalogs and entering the approved catalogs into the learning system, adding and reserving class resources, sending students pre-course materials, adding and modifying course locations, canceling instructor sessions and unbooking allocated resources, deleting scheduled meetings, distributing notices of changes by sending e-mails to interested parties, updating student transcripts and attendance information, administering on-line course and instructor evaluations, mailing course completion materials to students, and sending course completion or passage/certification records to human resources for employee files.

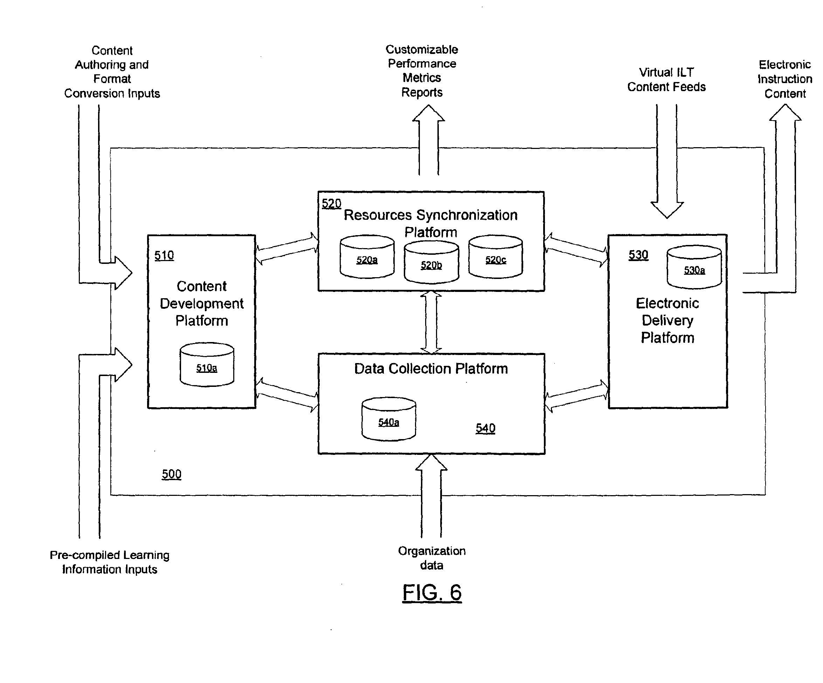

The learning solutions compile, track, report and utilize performance metrics to assist in ensuring that learning efforts provided by the solution coincide with business strategies and priorities in all aspects of learning including the identification and prioritization of learning needs; the selection of learning approaches, and the development of learning content, and the coordination and delivery of learning instruction. The performance metrics use the same objective indicia used by the organization to gauge success. Performance metrics can be collected, tracked compiled, and reported automatically by information gathering and sorting tools, as described below with respect to FIG. 6.

As described above, embodiments of the learning solution provided according to the present invention are "outsourceable" in that they can either be outsourced by the learner organization (whereby the processes of the learning solution are implemented by a third-party learning services provider under contract to the learner organization) or can be implemented internally by a sub-unit within the learner organization (as, for example, an independent learning business unit within the "outsourcing" organization). In embodiments of the invention wherein a learning services business unit within an organization provides learning services to other business units within the organization, the learning services business unit would still use the organization's existing performance metrics to determine its success.

In some embodiments of the present invention the learning solution is provided by an independent business entity according to a service level agreement with an organization in need of learning services outsourcing. A service level agreement is a contract between the learning solution services provider and the licensing (i.e., outsourcing) organization that establishes the requisite quality and effectiveness levels of the learning solution services as measured by one or more pre-selected performance metrics.

The terms of a service level agreement may require (as compared with the levels measured before the implementation of a given learning effort), for example, minimum performance metric increases regarding gross sales generated by each trained salesperson. Such an outsourced learning solution tracks and reports pre-selected performance metrics to the outsourcing organization on a continuous basis to facilitate cost allocation among appropriate business units or to specific learning efforts (equivalently, "training efforts"), and uses them within the learning solution to gauge the level of effectiveness of particular learning efforts in helping the organization reach desired business objectives and thus refine future learning efforts and overall strategies.

Furthermore, the business management module provides the learning solution with the capability to manage the overall lifecycle of learning initiatives and efforts and to refine the processes employed to identify, develop, manage, and deliver ongoing and future learning initiatives and efforts in a "profit" driven manner. To achieve this end, the business management module leverages selected performance metrics on a regular basis, such as weekly, monthly, quarterly and/or annually, in various learning solution business management processes to ensure that the learning solution is satisfying its "clients" and utilizing resources to do so in the most efficient (i.e., "profitable") manner possible. For example, the business management module can compile weekly status reports and forecasts from selected benchmark performance metrics to determine effectiveness of particular learning solutions and determine where remediation may be appropriate. Likewise, the business management module can collate and report performance metrics on a monthly basis as a comparison to commitments required by a relevant service level agreement, and generate appropriate billing reports regarding learning services rendered. Additionally, quarterly reporting of performance metrics can report longer-term performance of the learning solution in comparison to minimum performance levels stipulated in a service level agreement. Such quarterly reports can be used by the business management module to forecast future fiscal year learning services budgets for a learner organization or for making, as necessary, adjustments to the organization's current learning blueprint in conjunction with the business management module. Finally, yearly (or longer term) reports also containing compilations of relevant performance metrics data, indications regarding the level of success in meeting service level agreement commitments, and financial cost/performance information can be used by the business management module to generally re-assess the business strategies and priorities being pursued by the learning solution, including in negotiating output level criteria for future service level agreements, in assisting the business strategy interlock module in preparing new learning blueprints for upcoming fiscal years, and in preparing learning budgets and budget allocations for the new blueprint.

The operation of the modules of learning solution 100 is preferably facilitated by various information sharing tools provided by a computing network. FIG. 6 schematically depicts a network 500 of learning platforms that communicate to provide coordination and synchronization of learning content development, delivery and management so as to enhance the learning solution's response time to organization, instructor, student, and/or resource concerns and issues. The learning platform network 500 according to such embodiments integrates various electronic tools to collect data from an organization in order to allow the computation and use of business performance metrics. As shown in FIG. 6, a learning platform network 500 includes a content development platform 510, a resources synchronization platform 520, an electronic delivery platform 530, and a data collection platform 540 all communicating electronically with one another. Each of the platforms that include the network 500 are composed of suitable servers, storage devices (including databases), memory devices and support hardware as is known in the art of computer networks to achieve the functions of each platform as described herein.

As shown in FIG. 6, the network 500 also interfaces with various users (including learning solution administrators) to facilitate the dissemination of learning resource allocation information, on an as-requested basis, and thereby enable informed decision making regarding the utilization of various learning resources (personnel, electronic, physical, etc.). The resources synchronization platform 520 of the learning solution network 500 collects and tracks resource availability information regarding deliverable learning content, and delivery resources (classrooms, virtual classroom technology, target learner participation windows, instructor schedules) and organizes this information into sortable scheduling and usage reports that allow learning administrators to make and/or modify schedules and resource allocations for learning content delivery.

The resources synchronization platform 520 further provides a means whereby performance metrics are compiled and tracked. These are collected from the data collection platform 540. The resources synchronization platform 520 similarly provides various reports of these performance metrics to assist administrators in performing various processes of the business management module as described herein, including the reconsideration and revision of business strategies and priorities, associated learning budget allocations, and service level agreements.

Content development platform 510 of network 500 automates many functions associated with the content management module 120 by providing content authoring and compiling tools. As shown in FIG. 6, the content development module provides user interfaces for developing new or modified learning content, accepting learning content information (such as from external third-party sources), certifying, versioning and formatting new learning content data to comply with downstream network requirements (such as formatting self-paced computer-delivered learning content objects to comply with SCORM standards), and tagging and cataloging new or modified learning content for storage in a learning content data warehouse. Content development platform 510 also provides access to electronic authoring tools for formatting and compiling learning content information into computer-deliverable electronic learning objects.

Electronic delivery platform 530, as depicted in FIG. 6, provides network 500 with its primary interface with the target learners (i.e., the employees of the learner organization). The electronic delivery platform 530 has tools that enable asynchronous delivery of computer delivered instructional content (preferably remotely over a secure network, such as via a web-browser over a secure WAN) to authenticated target learners and track testing and/or certification results from examinations administered in conjunction with electronically delivered instruction. Additionally, platform 530 also provides tools that enable target learners to participate remotely in live classroom instruction via virtual classroom technologies.

In use, learning solution network 500 facilitates the various processes as described above that embody learning solutions according to the present invention. By way of illustration, once a new action plan calling for new or modified computer-deliverable self-paced instruction content has been sufficiently finalized in response to a learning effort proposal (such as in the form of the LEP prepared for and provided to the content management module 120), content developers can utilize the various electronic content authoring and compilation tools of the content development platform 510 to author electronic learning content objects. Such tools, among other things, enable the creation and organization of object-oriented asynchronous computerized learning courses (henceforth, "OOAC courses") as well as the development of their constituent electronic learning content objects. The tools provided by the content development platform 510 also enable importing of third-party information, content, and objects for incorporation into OOAC new or revised courses. Such electronic learning information and in-development learning content objects are stored in a developing content database 510a until they are ready (i.e., compiled, formatted, versioned, tagged and cataloged) for electronic delivery to students. The completed content objects are then electronically communicated to the resources synchronization platform 520 for storage and subsequent delivery.

Resources synchronization platform 520 accepts new or modified learning content from the content development platform 510 and stores it in a content warehouse database 520a (along with pre-existing content objects) according to appropriate tags and catalog identifiers assigned by the content development platform 510. These tags and identifiers allow the network to locate and identify content objects relating to particular courses and deliver the appropriate objects upon subsequent demands initiated via the electronic delivery platform 530. The synchronization platform receives electronic requests for learning content from the electronic delivery platform 530 and initiates processing of these requests by retrieving the requested data from the content warehouse database 520a.

On an ongoing basis, the resources synchronization platform 520 simultaneously provides an interface for learning administrators to review the current allocation of learning resources (as detailed in a resource schedule database 520b) through customized scheduling and usage reports, and then use these reports for making resource allocation decisions (using a graphical interface of a scheduling tool provided by the resources synchronization platform 520) as appropriate based upon system constraints, current allocations, demands by learning efforts for learning solution resources, and the relative priorities of these competing demands for resources. Any resource allocation decisions made in this manner are appropriately reflected in the resource schedule database 520b. The allocation data stored in the resource schedule database 520b, and thus the reports provided by the resources synchronization platform 520, can include the current allocations and availabilities of resources used by all learning efforts of the learning solution 100, including classrooms, instructors, virtual classroom technology, OOAC delivery technology, as well as include delivery constraint information relating to target learner participation windows and organization-imposed delivery deadlines. In this manner, decision making regarding the scheduled delivery of learning content (both electronic and otherwise) can be synchronized across an entire organization in a proactive manner to avoid schedule conflicts and inefficient usage of finite learning resources.

Simultaneously, the resources synchronization platform 520 preferably provides means for accessing correlated performance metrics data that is automatically collected and stored for purposes of enabling the business management of the learning solution. These performance metrics are reported by the data collection module 540. A performance metrics tracking and reporting tool of the resources synchronization administration platform 520 provides electronic access for learning administrators and executives to the performance metrics database 520c and thereby enables them to generate up-to-date reports regarding performance metrics they select at any time and for any time period. In this manner, the performance metrics data that determines the return on investment for a learning solution can be centrally collected and more easily utilized, which may be useful, for example, where minimum performance levels are dictated in a service level agreement or where a learning solution may be modified upon review of performance reports. Understandably, reports detailing such performance metrics data can be used by the business management module and business strategy alignment modules as described above to assemble, reassess and revise learning blueprints, learning solution budgets and overall strategies and priorities as necessary.

Electronic delivery platform 530, as shown in FIG. 6, contains a delivery management database 530a. The delivery management database 530a contains catalog and learner access information relating to courses and related learning content so as to control access by various target learners (i.e., employees) to appropriately authorized learning content. This delivery management information is used by a learner delivery interface to provide virtual classroom data (as received from live virtual content feeds) and OOAC course data electronically to authenticated student users upon demand.

The data collection platform 540 interfaces with an outside data source. The organization's data source sends performance metrics to the data collection platform 540, where it is stored in performance database 540a. The performance database 540a includes fields for name, description, units, target, owner, trend, period, comment, etc. as required by the organization data source. The data collection platform 540 contains a statistical package to allow functions including reporting trends on metrics, identification of dependent and independent variables, and modeling relationships among variables. The data collection platform 540 further contains rules to allow it to translate business events (i.e., changes in metrics over time) into monetary value. The data collection platform 540 also includes logic to break down a learning solution into individual learning activities and identify trends in metrics caused by individual learning activities. The data collection platform 540 further includes the ability to compare metrics against historical data.

## Claims

1. A method for aligning employee learning efforts with strategic business goals and priorities of an employer organization, said method comprising:
receiving a set of business goals from the employer organization;
identifying performance data collected by the employer organization;
transforming the business goals of the employer organization into performance metrics relative to the performance data;
designating business tracts and initiatives for use in sorting potential learning efforts of the employer organization, the tracts and initiatives correlating to the performance metrics;
receiving requests from the employer organization for learning efforts to train the employees and sorting the requests into tracts or initiatives;
selecting appropriate learning effort approaches for each received request, the appropriate learning effort approaches being subject to a budget allocation for the tract or initiative into which each learning effort request is sorted;
monitoring the performance data subsequent to delivery of the learning effort and computing changes in the performance data caused by delivery of the learning effort;
reporting measurement of the performance metrics based on the computed changes in the performance data.

2. The method of claim 1, further comprising analyzing the set of business goals and the collected performance data to determine the feasibility of using the collected performance data to measure achievement of the set of business goals.

3. The method of claim 1 or 2, the step of transforming the business goals of the employer organization into performance metrics relative to the performance data further comprising identifying performance gaps, where the performance gap is the difference between a current value of performance data and a desired value of performance data.

4. The method of one of the preceding claims, the step of transforming the business goals of the employer organization into performance metrics relative to the performance data further comprising identifying sources of data needed to measure the performance metrics, the sources of data being provided by the employer organization.

5. The method of claim 4, further comprising determining an appropriate data collection method for the identified sources of data.

6. The method of one of the preceding claims, further comprising using an isolation mechanism to isolate the effect of the learning effort on the performance data.

7. The method of claim 6, the isolation mechanism being one of: use of a control group, use of historical data to create a baseline, and use of estimated data to create a baseline.

8. The method of one of the preceding claims, the step of reporting measurement of the performance metrics further comprising converting the computed changes in the performance data to monetary values.

9. The method of one of the preceding claims, further comprising recommending remedial actions based on the reported measurement of performance metrics.

10. A network-based system to provide coordination and synchronization of learning content development, delivery, and management, comprising:
a content development module, the content development module including submodules for receiving input related to learning content and generating computer-deliverable learning content;
an electronic delivery module, the electronic delivery module including submodules for delivering instruction to students, the delivering of instruction including asynchronous computer-delivered instruction and synchronous virtual classroom instruction, the computer-delivered instruction incorporating the learning content;
a data collection module, the data collection module including submodules for receiving performance data from an external data source and measuring the performance data against stored performance metrics, the performance metrics measuring the results of the delivery of the instruction to students;
a resources synchronization module, the resources synchronization module including submodules for scheduling and allocating the utilization of learning resources in the delivery of the instruction and in the development of the learning content.

11. The system of claim 10, the data collection module further including a database for storing performance data for students.

12. The system of claim 11, the data collection module storing performance data for students in the database so that changes in performance data over time are tracked.

13. The system of claim 12, the data collection module further including a submodule for statistically analyzing changes in performance data over time.

14. The system of claims 12 or 13, the data collection module further including a submodule for translating statistical measurements of changes in performance data over time into monetary values.

15. The system of one of claims 10 to 14, the data collection module further including stored historical performance data, the difference between the historical performance data and the received performance data being computed.

16. The system of one of claims 10-15, the data collection module further including a submodule for reporting measurements of performance metrics.
